Europäisches Patentamt

European Patent Office

Office européen des brevets

(19)

(11) Numéro de publication : **0 470 001 A1**

(12) # DEMANDE DE BREVET EUROPEEN

(21) Numéro de dépôt : **91402160.5**

(22) Date de dépôt : **01.08.91**

(51) Int. Cl.⁵ : **B01D 61/56,** B01D 57/02

(30) Priorité : **03.08.90 FR 9009961**

(43) Date de publication de la demande :
**05.02.92 Bulletin 92/06**

(84) Etats contractants désignés :
**AT BE CH DE DK ES FR GB GR IT LI LU NL SE**

(71) Demandeur : **ELECTRICITE DE FRANCE**
**Service National**
**2, rue Louis Murat**
**F-75008 Paris (FR)**

(72) Inventeur : **Damien, Alain**
**7 rue Gambetta**
**F-95150 Taverny (FR)**

(74) Mandataire : **Martin, Jean-Jacques et al**
**Cabinet REGIMBEAU 26, Avenue Kléber**
**F-75116 Paris (FR)**

(54) **Procédé et appareil de déshydratation électrocinétique.**

(57) Procédé de déshydratation électrocinétique d'un produit constitué par une suspension de particules solides dans un liquide, lesdites particules solides présentant un potentiel électrocinétique $P_z$, caractérisé en ce que ledit procédé de déshydratation consiste :
— à remplir avec ladite suspension une cellule (10) à tiroir au fond duquel est disposée une première électrode (13) de signe opposé audit potentiel électrocinétique $P_z$,
— à placer, en regard de ladite première électrode (13) une électrode (14) d'électrophorèse, de signe opposé à la première électrode (13),
— à effectuer une opération d'électrophorèse jusqu'à obtenir à la première électrode (13) une pâte formée desdites particules solides,
— à remplacer ladite électrode (14) d'électrophorèse par une électrode (15) d'électroosmose munie d'une membrane poreuse,
— à soumettre ladite pâte à une force de pression dirigée vers la première électrode (13),
— à effectuer, simultanément, une opération d'électroosmose jusqu'à obtenir une croûte formée desdites particules solides.
Application notamment aux boues issues de l'exploitation des minerais.

EP 0 470 001 A1

FIG.1

La présente invention concerne un procédé et un appareil de déshydratation électrocinétique d'un produit constitué par une suspension de particules solides dans un liquide, lesdites particules solides présentant un potentiel électrocinétique non nul par rapport audit liquide.

L'invention trouve une application particulièrement avantageuse dans le domaine de la déshydratation de produits tels que :

- les charges minérales pour diverses industries : papetière, matières plastiques, céramique, peintures et colorants, etc...,
- les boues des stations d'épuration,
- les boues issues de l'exploitation des minerais.

L'extraction du liquide, l'eau essentiellement, renfermé dans un produit recouvre deux notions : la déshydratation et l'assèchement. La déshydratation désigne la phase où le produit concerné n'est pas déshydraté en totalité. Industriellement, la déshydratation est obtenue généralement par voie mécanique (décantation, centrifugation, filtration, etc...) Pour des raisons d'économie, cette étape précède la phase d'assèchement thermique où le produit est totalement déshydraté. Cette opération est coûteuse car il faut fournir la chaleur latente du liquide.

La déshydratation mécanique s'avère cependant difficile à mettre en oeuvre dans le cas des colloïdes que le comportement imperméable ne permet pas de déshydrater par cette voie.

Pour ce type de produit, l'assèchement thermique reste employé, malgré son coût, même pour des taux d'humidité très élevés.

La déshydratation par phénomène électrocinétique, électrophorèse ou électroosmose, permet d'éviter l'assèchement thermique des particules colloïdales en milieu d'humidité supérieur à 20 % et constitué de particules solides de granulométrie inférieure à 10 µm.

Les phénomènes électrocinétiques mettent en jeu la propriété pour un élément de surface solide isolant en contact avec un électrolyte faiblement conducteur d'être l'objet d'une différence de potentiel induite entre les milieux solide et liquide contigus. C'est ce que l'on appelle le potentiel électrocinétique, ou potentiel Zéta. Pour certains produits comme la tourbe, le potentiel Zéta est naturel et autostabilisé par rapport au pH. Cependant, la plupart des produits nécessitent l'emploi d'un dispersant, comme un agent tensio-actif ionique dont la conductibilité électrique reste limitée.

Le potentiel Zéta est à l'origine des phénomènes électrocinétiques, tels que :

- l'électrophorèse ou déplacement de particules solides isolantes en suspension dans un liquide sous l'effet d'un champ électrique. Le milieu à déshydrater est alors considéré comme un liquide, le produit obtenu à l'électrode concernée (en général l'anode, car la plupart des suspensions traitées présentent un potentiel électrocinétique négatif) ayant l'aspect d'une pâte que l'on recueille par raclage sur un support, tissu filtrant par exemple ;
- l'électroosmose ou déplacement du liquide sous l'action d'un champ électrique, à l'intérieur d'un milieu poreux, les particules étant maintenues immobiles. Le produit à déshydrater est alors considéré comme un solide, le produit obtenu à l'électrode concernée ayant l'aspect d'un gâteau ou d'une croûte solide.

La déshydratation des produits par voie électrocinétique est connue depuis longtemps. Le brevet américain N° 670 350 par exemple, traite de la déshydratation de la tourbe par électroosmose, tandis que le brevet américain N° 1 133 967 concerne la déshydratation de la kaolinite par électrophorèse. Depuis, des appareils industriels ont été développés utilisant généralement l'électrophorèse, l'électroosmose étant employée pour le traitement des boues d'épuration.

Ces appareils industriels fonctionnent en continu sous des champs électriques importants de manière à augmenter le débit pour un investissement déterminé. Cependant, une densité de courant élevé dégrade le rendement énergétique par effet joule, et conduit à des modestes performances comparables à celles des pompes à chaleur, à savoir 150 à 500 kwh par tonne d'eau extraite.

D'autre part, il convient de noter qu'aucun appareil existant ne permet de mener la déshydratation d'une suspension liquide jusqu'au stade ultime de la croûte. Ceci est dû au fait qu'actuellement les opérations d'électrophorèse et d'électroosmose sont réalisées dans des dispositifs séparés et que la manipulation de la pâte intermédiaire est très délicate.

Aussi, un problème technique à résoudre par l'objet de la présente invention est de proposer un procédé et de réaliser un appareil, conformes au préambule, qui permettraient d'une part, d'obtenir, avec un investissement limité, un débit suffisant de l'ordre de 1 à 10 tonnes de produit par heure, tout en utilisant des champs électriques faibles de façon à limiter la consommation à 20-100 kwh par tonne d'eau extraite et, d'autre part, de traiter, sans manipulation de pâte, une suspension liquide jusqu'au stade de la croûte solide.

La solution au problème technique posé est notamment remarquable en ce que ledit procédé de déshydratation consiste :

- à remplir avec ladite suspension, sur une hauteur donnée, une cellule à tiroir au fond duquel est disposée une première électrode de signe opposé audit potentiel électrocinétique,
- à placer, en regard de ladite première électrode et à une distance fixe au plus égale à ladite hauteur donnée, une deuxième électrode dite électrode d'électrophorèse, de signe opposé à la première électrode et munie de perforations,

– à effectuer une opération d'électrophorèse jusqu'à obtenir à la première électrode une pâte formée desdites particules solides,

– à remplacer ladite électrode d'électrophorèse par une troisième électrode, dite électrode d'électroosmose, de même signe que l'électrode d'électrophorèse, également perforée et munie d'une membrane poreuse,

– à soumettre ladite pâte à une force de pression dirigée vers la première électrode, exercée par l'intermédiaire de ladite électrode d'électroosmose,

– à effectuer, simultanément, une opération d'électroosmose jusqu'à obtenir, entre la première et troisième électrodes, une croûte formée desdites particules solides,

– à séparer ledit liquide de ladite croûte.

Ainsi, les opérations d'électrophorèse et d'électroosmose se faisant dans la même cellule par simple changement de l'électrode concernée, il n'y a pas lieu de manipuler la pâte résultant de l'électrophorèse. C'est d'ailleurs le mérite de la Demanderesse d'avoir compris que, les deux phénomènes d'électrophorèse et d'électroosmose ayant une origine électrochimique commune, il devait être possible de les combiner favorablement moyennant un investissement modeste, contrairement aux appareils connus de l'état de la technique qui fonctionnent selon l'un ou l'autre des phénomènes. Par ailleurs, la Demanderesse a effectué des essais qui ont montré que les objectifs énergétiques étaient atteints, une cellule a fonctionné dans les conditions représentatives d'une cellule industrielle assurant un débit de 6,2 tonnes de produit par heure pour une consommation de 24 kwh par tonne d'eau extraite.

Selon une autre caractéristique avantageuse de l'invention, il est également prévu que, préalablement à ladite opération d'électroosmose, on effectue un contrôle de pH du liquide. Cette disposition est particulièrement intéressante lorsque le procédé de déshydratation selon l'invention est appliqué au traitement des boues issues de l'exploitation des minerais. Dans cette application, il est souhaitable d'épuiser au maximum le minerai en métal de façon à extraire ultérieurement, par des moyens chimiques classiques, ledit métal de l'eau contenue dans les boues. En l'absence de contrôle du pH, au lieu de rester en solution, l'ion métallique risquerait de précipiter avec les ions $OH^-$ provenant de l'électrolyse de l'eau.

La description qui va suivre en regard des dessins annexés, donnés à titre d'exemples non limitatifs, fera bien comprendre en quoi consiste l'invention et comment elle peut être réalisée.

– La figure 1 est une vue en perspective éclatée d'une cellule à tiroir utilisée dans le procédé et l'appareil de déshydratation selon l'invention ;

– La figure 2 est le schéma d'un appareil de déshydratation conforme à l'invention.

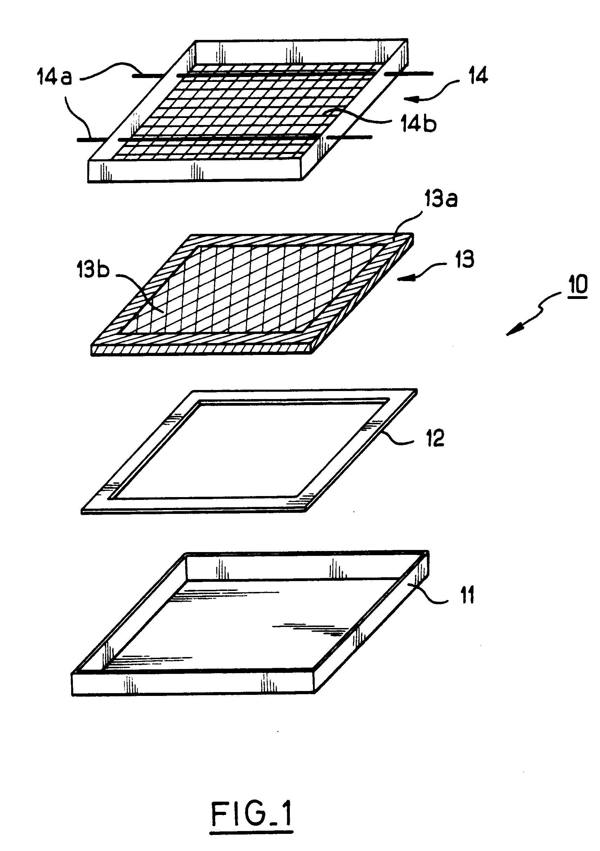

La figure 1 montre une cellule 10 à tiroir pour la déshydratation électrocinétique d'un produit constitué par une suspension de particules solides dans un liquide, de l'eau ou un électrolyte, lesdites particules présentant un potentiel électrocinétique, ou potentiel Zéta $P_z$, non nul par rapport audit liquide. La cellule 10 comporte un tiroir isolant 11 en polychlorure de vinyle, ou PVC, par exemple, au fond duquel sont disposées quatre barres en composite de fibres de carbone formant un cadre 12, destinées à amener le courant à une première électrode 13 qui, d'une façon générale, est de signe opposé au potentiel Zéta $P_z$ du produit à déshydrater. En pratique, on se placera dans le cas le plus fréquent où le potentiel Zéta $P_z$ est négatif, ladite première électrode 13 étant alors une anode. La cellule 10 pouvant atteindre une surface de l'ordre de 0,25 m², il est exclu, pour des raisons de prix, d'utiliser des matériaux comme le platine ou le ruthénium pour réaliser l'anode 13. De même, la présence de chlorures dans la déshydratation de certaines boues ne permet pas d'envisager l'emploi de plomb à l'anode et, pour des raisons de pollution, l'utilisation du fer est à éviter. Aussi, l'anode est, de préférence, réalisée à base de carbone. Plus particulièrement, l'anode 13 de la figure 1 est constituée d'une plaque de PVC supportant un feutre 13a conducteur et poreux recouvert d'un tissu filtrant 13b. L'avantage d'utiliser un support anodique poreux est d'éliminer l'oxygène produit par l'intérieur de l'anode lors du dépôt électrophorétique d'une pâte homogène, et ainsi d'éviter la formation de poches de gaz isolantes dans la pâte.

L'anode 13 est disposée horizontalement au fond du tiroir 11, en appui sur le cadre conducteur 12. Après avoir rempli la cellule 10 sur une hauteur donnée avec le produit à déshydrater, une deuxième électrode 14, ici la cathode d'électrophorèse, est placée dans la cellule 10, en regard de l'anode 13 à une distance fixe au plus égale à ladite hauteur donnée de la suspension. Ladite distance fixe est déterminée par exemple par des moyens d'espacement constitués par deux barres 14a venant s'appuyer sur les bords du tiroir 11. La cathode 14 d'électrophorèse peut être réalisée en acier inoxydable déployé sur un support 14b en PVC muni de perforations destinées à laisser migrer les particules solides lors de l'opération d'électrophorèse.

Lorsque l'électrophorèse est terminée, la cathode 14 est remplacée par un troisième électrode, la cathode d'électroosmose, non représentée à la figure 1 mais qui peut être identique à la cathode d'électrophorèse si ce n'est qu'elle est dépourvue des barres 14a et qu'elle est recouverte d'une membrane poreuse d'électroosmose, c'est-à-dire perméable à l'eau et imperméable aux particules solides. La cathode d'électroosmose est appliquée contre la pâte formée au cours de l'électrophorèse, celle-ci étant soumise à une force de pression exercée par l'intermédiaire de la cathode d'électroosmose par un poids d'origne quelconque.

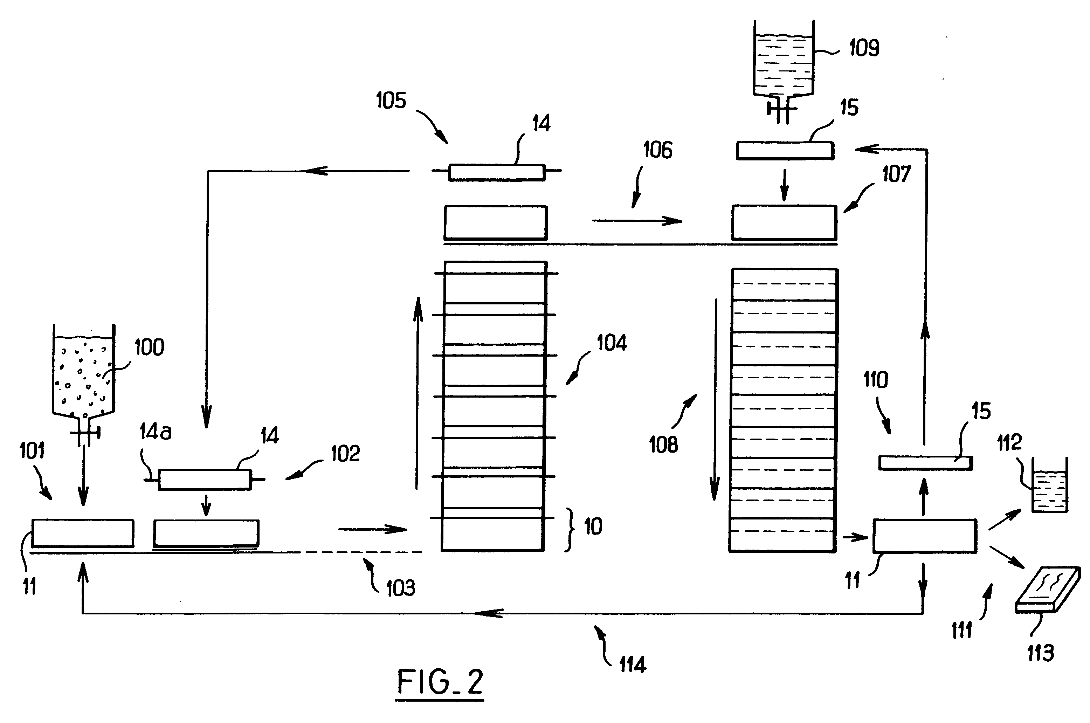

L'appareil de déshydratation électrocinétique montré à la figure 2 comprend un poste 101 de remplissage, sur une hauteur donnée, avec une suspension 100, d'une cellule à tiroir déjà équipée de son anode. La cellule est ensuite amenée à un poste 102 de pose de la cathode 14 d'électrophorèse munie des moyens 14a d'espacement permettant de maintenir l'électrode d'électrophorèse en regard de l'anode à une distance au plus égale à la hauteur de la suspension.

Puis, un premier dispositif 103 de convoyage amène la cellule ainsi équipée vers la partie inférieure d'une colonne 104, dite colonne d'électrophorèse, dans laquelle sont superposées un nombre n de cellules de l'ordre de 15. Les cellules présentes dans la colonne sont reliées à une source de tension de 20 V, par exemple, et soumises à une opération d'électrophorèse pendant un temps de 30 minutes environ au cours duquel chaque cellule parcourt le trajet ascendant de la partie inférieure de la colonne d'électrophorèse jusqu'à son sommet. Quand une cellule parvient au sommet de la colonne 104, elle est dégagée et, simultanément, une nouvelle cellule est introduite à la partie inférieure de la colonne, ceci au rythme d'une cellule toutes les deux minutes. La cellule sortante de la colonne 104 d'électrophorèse contient une pâte de particules solides déposée sur le tissu filtrant de l'anode de la cellule.

Un poste 105 de dépose de la cathode 14 d'électrophorèse, situé au sommet de la colonne 104, renvoie ladite cathode 14 au poste 102 de pose. Un deuxième dispositif 106 de convoyage transfère alors la cellule vers un poste 107 de pose d'une troisième électrode, la cathode 15 d'électroosmose, ledit poste 107 de pose étant situé au sommet d'une deuxième colonne 108, dite colonne d'électroosmose. En cas de besoin, un poste 109 de contrôle du pH, disposé au sommet de la colonne 108, injecte une quantité prédéterminée d'acide, par exemple, pour neutraliser le catholyte.

La colonne 108 d'électroosmose comprend m cellules empilées les unes sur les autres de façon à ce que la pâte contenue dans chaque cellule soit soumise à une force de pression dirigée vers l'anode, exercée par le poids des cellules supérieures par l'intermédiaire de la cathode d'électroosmose. Ainsi, chaque cathode 15 d'électroosmose supporte toutes les cellules à tiroir de la colonne d'électroosmose, afin d'accroître la pression de contact entre la cathode d'électroosmose et la croûte au fur et à mesure du durcissement de cette dernière. Les cellules de la colonne 108 sont reliées à une deuxième source de tension qui peut être de 20 V également, et sont animées d'un mouvement descendant au cours duquel la pâte se durcit par électroosmose tout en supportant une pression qui s'accroît chaque fois qu'une nouvelle cellule est introduite au sommet de la colonne 108. De façon non limitative, le nombre m de cellules dans la colonne d'électroosmose peut être égal au nombre n de cellules dans la colonnes d'électrophorèse, soit 15 par exemple.

A l'arrivée dans la partie inférieure de la colonne 108, les cellules passent par un poste 110 de dépose de la cathode 15 d'électrosmose, laquelle est renvoyée au poste 107 de pose au sommet de la colonne 108. Un poste 111 de séparation permet de récupérer le liquide 112 et la croûte 113, cette dernière présentant l'avantage de l'effet de compression d'être exempte de fissures. La cellule ainsi vidée, mais toujours munie de l'anode, est acheminée vers le poste 101 de remplissage par un troisième dispositif 114 de convoyage.

## Revendications

1. Procédé de déshydratation électrocinétique d'un produit constitué par une suspension de particules solides dans un liquide, lesdites particules solides présentant un potentiel électrocinétique $P_Z$ non nul par rapport audit liquide, caractérisé en ce que ledit procédé de déshydratation consiste:
   – à remplir avec ladite suspension, sur une hauteur donnée, une cellule (10) à tiroir au fond duquel est disposée une première électrode (13) de signe opposé audit potentiel électrocinétique ($P_Z$),
   – à placer, en regard de ladite première électrode (13) et à une distance fixe au plus égale à ladite hauteur donnée, une deuxième électrode (14), dite électrode d'électrophorèse, de signe opposé à la première électrode ( 13) et munie de perforations,
   – à effectuer une opération d'électrophorèse jusqu'à obtenir à la première électrode (13) une pâte formée desdites particules solides,
   – à remplacer ladite électrode (14) d'électrophorèse par une troisième électrode (15), dite électrode d'électroosmose, de même signe que l'électrode d'électrophorèse, également perforée et munie d'une membrane poreuse,
   – à soumettre ladite pâte à une force de pression dirigée vers la première électrode (13), exercée par l'intermédiaire de ladite électrode (15) d'électroosmose,
   – à effectuer, simultanément, une opération d'électroosmose jusqu'à obtenir, entre la première (13) et troisième (15) électrodes, une croûte formée desdites particules solides,
   – à séparer ledit liquide de ladite croûte.

2. Procédé selon la revendication 1, caractérisé en ce que, préalablement à ladite opération d'électroosmose, on effectue un contrôle du pH du liquide.

3. Appareil de déshydratation électrocinétique d'un produit constitué par une suspension de particules solides dans un liquide, lesdites particules solides présentant un potentiel électrocinétique ($P_z$) non nul par rapport audit liquide, caractérisé en ce que ledit appareil de déshydratation comprend :

    – un poste (101) de remplissage avec ladite suspension, sur une hauteur donnée d'une cellule (10) à tiroir comportant un tiroir (11) isolant et, disposée au fond dudit tiroir, une première électrode (13) de signe opposé audit potentiel électrocinétique ($P_z$),

    – un poste (102) de pose d'une deuxième électrode (14), dite électrode d'électrophorèse, de signe opposé à la première électrode (13), et munie de perforations, ladite deuxième électrode (14) disposant de moyens (14a) d'espacement destinés à maintenir la deuxième électrode (14) en regard de la première électrode (13) à une distance fixe au plus égale à ladite hauteur donnée,

    – un premier dispositif (103) de convoyage de ladite cellule (10) à tiroir vers la partie inférieure d'une colonne (104) de n cellules à tiroir superposées, dite colonne d'électrophorèse, dans laquelle lesdites cellules sont reliées à une première source de tension afin de les soumettre à une opération d'électrophorèse, et animées d'un mouvement ascendant tel que, à l'arrivée des cellules à tiroir au sommet de ladite colonne (104) d'électrophorèse, une pâte formée desdites particules solides soit obtenue à ladite première électrode,

    – un poste (105) de dépose de l'électrode (14) d'électrophorèse, situé au sommet de la colonne d'électrophorèse, ladite électrode d'électrophorèse étant renvoyée audit poste (102) de pose de la deuxième électrode (14),

    – un deuxième dispositif (106) de convoyage de ladite cellule (10) à tiroir vers un poste (107) de pose d'une troisième électrode (15), dite électrode d'électroosmose, de même signe que l'électrode ( 14) d'électrophorèse, également perforée et munie d'une membrane poreuse, ledit poste (107) de pose de la troisième électrode (15) étant situé au sommet d'une colonne (108) de m cellules à tiroir, dite colonne d'électroosmose, dans laquelle lesdites cellules sont empilées les unes sur les autres de façon à ce que ladite pâte de chaque cellule soit soumise à une force de pression dirigée vers la première électrode (13), exercée par l'intermédiaire de ladite électrode (15) d'électroosmose, lesdites cellules étant reliées à une deuxième source de tension afin de les soumettre à une opération d'électroosmose, et animées d'un mouvement descendant tel qu'à l'arrivée des cellules à tiroir à la partie inférieure de ladite colonne (108) d'électroosmose une croûte formée desdites particules solides soit obtenue entre les première (13) et troisième électrode (15),

    – un poste (110) de dépose de l'électrode (15) d'électroosmose, situé à la partie inférieure de la colonne (108) d'électroosmose, ladite électrode d'électroosmose étant renvoyée audite poste (107) de pose de la troisième électrode,

    – un poste (111) de séparation dudit liquide (112) de ladite croûte (113),

    – un troisième dispositif (114) de convoyage transportant ladite cellule (10) à tiroir munie de la première électrode (13) audit poste (101) de remplissage.

4. Appareil selon la revendication 3, caractérisé en ce qu'au sommet de la colonne (108) d'électroosmose, il comporte un poste (109) de contrôle du pH du liquide.

5. Appareil selon l'une des revendications 3 ou 4, caractérisé en ce que ladite première électrode (13) est à base de carbone.

6. Appareil selon l'une des revendications 3 à 5, caractérisé en ce que ladite première électrode (13) comporte un support poreux.

7. Appareil selon l'une des revendications 3 à 6, caractérisé en ce que chaque électrode (15) d'électroosmose supporte toutes les cellules à tiroir de la colonne (108) d'électroosmose, afin d'accroître la pression de contact entre l'électrode d'électroosmose et ladite croûte au fur et à mesure du durcissement de cette dernière.

## FIG.1

FIG. 2

EP 0 470 001 A1

Office européen
des brevets

## RAPPORT DE RECHERCHE EUROPEENNE

Numero de la demande

EP    91 40 2160

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 367 132 (BELL)<br>* abrégé; revendications 1-3,5,8,10,28; figures 1,2,5 *<br>* colonne 2, ligne 31 - colonne 3, ligne 12 *<br>* colonne 3, ligne 49 - colonne 4, ligne 20 *<br>* colonne 4, ligne 39 - ligne 66 *<br>* colonne 5, ligne 5 - ligne 17 *<br>* colonne 5, ligne 36 - colonne 6, ligne 64 *<br>* colonne 10, ligne 3 - ligne 56 *<br>--- | 1 | B01D61/56<br>B01D57/02 |
| A | US DEP. OF THE INTERIOR; TECNOLOGY NEWS FROM THE BUREAU OF MINES<br>NTN-77/0150, No. 29, Sept. 1976<br>* le document en entier *<br>--- | 1 | |
| A | DE-A-2 263 545 (VEB CHEMIEANLAGENBAU STASSFURT)<br>* page 2, alinéa 2 -alinéa 3; revendications; figure *<br>--- | 1 | |
| A | GB-A-662 568 (DOBLE)<br>* page 1, ligne 70 - page 2, ligne 17; revendication 1; figure *<br>--- | 1 | |
| A | DE-C-154 114 (MÖLLER & PFEIFER)<br>* le document en entier *<br>----- | 1,3,7 | |

**DOMAINES TECHNIQUES RECHERCHES (Int. Cl.5)**

B01D
CO2F
C25B

Le présent rapport a été établi pour toutes les revendications

| Lieu de la recherche | Date d'achèvement de la recherche | Examinateur |
|---|---|---|
| LA HAYE | 25 OCTOBRE 1991 | HOORNAERT P.G.R.J. |

EPO FORM 1503 03.82 (P0402)